# EUROPEAN PATENT APPLICATION

(11) **EP 1 422 512 A1**
(43) Date of publication of application: **26.05.2004**
(21) Application number: 02760738.1
(22) Date of filing: 26.08.2002
(51) Int. Cl.: G01N 21/27, G01N 21/35, G01N 21/55

(54) **APPARATUS FOR MEASURING INFORMATION ON PARTICULAR COMPONENT**

(30) Priority: 28.08.2001 JP 2001257350
(71) Applicant: MATSUSHITA ELECTRIC INDUSTRIAL CO., LTD., Kadoma-shi, Osaka 571-8501 (JP)
(72) Inventor: UCHIDA, Shinji, Neyagawa-shi, Osaka 572-0807 (JP); OOSHIMA, Kiyoko, Shijonawate-shi, Osaka 575-0024 (JP)
(74) Representative: Grünecker, Kinkeldey, Stockmair & Schwanhäusser Anwaltssozietät
(86) International application number: PCT/JP2002/008551
(87) International publication number: WO 2003/021239

(57) **Abstract**

An information measuring apparatus and a measuring method of a specific component are obtained that can achieve high signal strength without being affected by an interfering substance on a surface of a sample.

The information measuring apparatus of a specific component comprises a light source 1, an ATR element 2 of emitting light from the light source 1 to a sample and receiving light returned from the sample, a photodetector 4 of detecting light returned to the ATR element, and a polarizer 3 set to permit passage of light of a P-polarized component more than light of other polarized components on an optical path between the light source 1 and the photodetector 4. Information such as a concentration of a specific component in the sample is measured according to light detected by the photodetector 4.

## Description

### Technical Field

The present invention relates to an information measuring apparatus of a specific component that noninvasively measures concentration information of a specific component such as glucose, cholesterol, and ethanol contained in a sample.

### Background Art

Conventionally, methods have been proposed for measuring a specific component in a sample, particularly in a living body and a solution by using an attenuated total reflection (hereinafter, abbreviated as ATR) measuring apparatus.

For example, Japanese Patent Laid-Open No. 9-113439 proposes a method of measuring a blood sugar by contacting upper and lower lips onto a transparent ATR element having a pair of reflection planes opposed in parallel.

According to this method, after an ATR prism is held between lips and is pressed from above and below, light is emitted to the ATR element, total reflection is repeated between the reflection plane of the ATR element and the boundary of the lip, and light permeating to the outside of the ATR element is analyzed.

Further, BME Vol. 5, No. 8 (Japanese Society for Medical and Biological Engineering, 1991) proposes a method in which after an ATR element composed of a ZnSe optical crystal and so on is contacted with oral mucous membrane, a laser beam with a wavelength of 9 to 11 microns is caused to enter the ATR element and is reflected in the ATR element in a multiplexed manner, and absorbed light and scatteringly reflected light are analyzed, so that a blood sugar and a concentration of ethanol in the blood are measured. According to this method, it is possible to noninvasively measure a concentration of a specific component such as glucose, ethanol, and cholesterol in real time.

This method applies evanescent light (so-called permeating light) to a quantitative analysis. Light passing through an ATR element slightly enters lips and is affected by components in existing body fluid.

For example, since glucose has a light absorbance peak at a light wave number of 1080 cm⁻¹, when light with this wave number is emitted to a living body, an absorption amount differs according to a change in concentration of glucose in the living body.

Therefore, by emitting this light to a living body and measuring light returned from the living body, it is possible to detect a change in absorption amount according to a change in concentration of each component, so that concentration information of each component can be obtained.

However, the conventional ATR measuring device has the following problems.

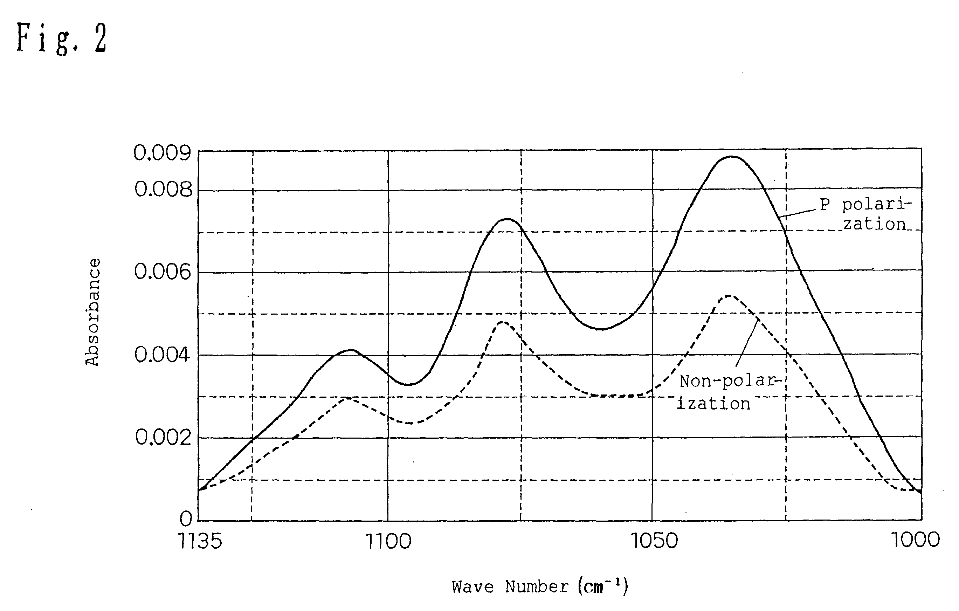

In general, a depth of an entering evanescent wave is a wavelength order. Since light can pass through a living body just over a short distance, sufficient signal strength cannot be obtained. Namely, since light passing through body fluid is extremely short in optical length, an amount of light absorbed by the body fluid is extremely small and thus sufficient signal strength cannot be obtained when absorbance is measured. A broken line of Figure 2 indicates an absorbance in a predetermined wavelength range of a glucose solution, the absorbance being measured by using light of non-polarization instead of a polarizer like the conventional ATR apparatus.

In this way, in the conventional ATR apparatus, since the signal strength of the absorbance is not sufficiently high, total reflection is repeated to increase the signal strength. However, an optical element has to be larger in size for repeated reflection and the cost increases.

Further, since the optical element increases in size, the measurement range becomes wide. Thus, a signal only from a specific point to be measured cannot be obtained and a resolution is low.

Moreover, since a depth of an evanescent wave entering in a living body is also a wavelength order and is extremely small, for example, problems arise when a concentration of glucose in oral mucous membrane is measured.

Namely, when a small amount of saliva exists on a surface of oral mucous membrane, light passes through the saliva and makes return. Thus, it is not possible to measure a concentration of glucose in oral mucous membrane existing behind the saliva.

### Disclosure of the Invention

Hence, in view of the above-described problem, the present invention has as its object the provision of an information measuring apparatus and a measuring method whereby the influence of an interfering substance on a surface of a sample is reduced and can obtain high signal strength.

To solve the above problems, a first invention of the present invention is an information measuring apparatus of a specific component, characterized in that the apparatus comprises:
a light source,
an optical element of emitting light from the light source to a sample and receiving light returned from the sample,
a photodetector of detecting light returned to the optical element, and
a polarizer set to permit passage of light of a P-polarized component more than light of other polarized components on an optical path between the light source and the photodetector, and
information of a specific component in the sample is measured according to light detected by the photodetector.

A second invention of the present invention is the information measuring apparatus according to the first invention of the present invention, characterized in that the photodetector detects an amount of the light, the information concerns a concentration, and the concentration is measured according to the amount of light.

A third invention of the present invention is the information measuring apparatus according to the first or the second invention of the present invention, characterized in that a wave number of the light and the specific component correspond to each other.

A fourth invention of the present invention is the information measuring apparatus according to any one of the first to the third inventions of the present invention, characterized in that the optical element is an ATR element, the sample is in contact with the ATR element, and the photodetector detects a P-polarized component permeating to the sample from the ATR element.

A fifth invention of the present invention is the information measuring apparatus according to any one of the second to the fourth inventions of the present invention, characterized in that the wave number of light includes at least a range from 1000 to 1125 cm⁻¹ and a concentration of glucose in the sample is measured according to an amount of light in the range of the wave number.

A sixth invention of the present invention is the information measuring apparatus according to any one of the first to the fifth inventions of the present invention, characterized in that the polarizer is integrated with the optical element, the light source, or the photodetector.

A seventh invention of the present invention is the information measuring apparatus according to any one of the first to the sixth inventions of the present invention, characterized in that the light source is a SiC light source or a quantum cascade light source.

An eighth invention of the present invention is the information measuring apparatus according to any one of the first to the seventh inventions of the present invention, characterized in that the photodetector is an MCT detector or a current collecting sensor.

A ninth invention of the present invention is the information measuring apparatus according to any one of the sixth to the eighth inventions of the present invention, characterized in that a shielding film of reflecting or absorbing at least some of polarized components other than the P-polarized component is formed on at least a part of an inputting/outputting surface of light from the optical element, the light source, or the photodetector, and the polarizer is formed on the formation part.

A tenth invention of the present invention is the information measuring apparatus according to the ninth invention of the present invention, characterized in that the optical element is composed of a plurality of the ATR elements, the plurality of ATR elements are arranged so that light inputting/outputting surfaces are aligned with each other, and the shielding film is formed on the arranged surfaces.

An eleventh invention of the present invention is the information measuring apparatus according to any one of the first to the tenth inventions of the present invention, characterized in that the light is emitted to mucous membrane of a living body.

A twelfth invention of the present invention is the information measuring apparatus according to any one of the first to the fourth inventions of the present invention, characterized in that the light is emitted to gas.

### Brief Description of the Drawings

Figure 1 is a schematic diagram showing the configuration of a concentration measuring apparatus of specific components according to an embodiment of the present invention;
Figure 2 is a characteristic diagram showing absorbance measurement results of a glucose solution in the concentration measuring apparatus of specific components according to the embodiment of the present invention;
Figure 3 is characteristic diagram showing absorbance measurement results of oral mucous membrane in the concentration measuring apparatus of specific components according to the embodiment of the present invention;
Figure 4 is a diagram showing the configuration having gas as a target in the concentration measuring apparatus of specific components according to the embodiment of the present invention;
Figure 5 is a perspective view showing a part of the configuration of the concentration measuring apparatus of specific components according to the embodiment of the present invention;
Figure 6 is a perspective view showing a part of configuration of concentration measurement of specific components according to the embodiment of the present invention;
Figure 7 is a sectional view showing a concentration measuring apparatus of an invention relating to the present invention; and
Figure 8 is a sectional view showing a state in which the concentration measuring apparatus of the invention relating to the present invention is used.

### (Description of Symbols)

- 1: Light source
- 2: ATR element
- 3: Polarizer
- 4: Photodetector

### Best Mode for Carrying out the Invention

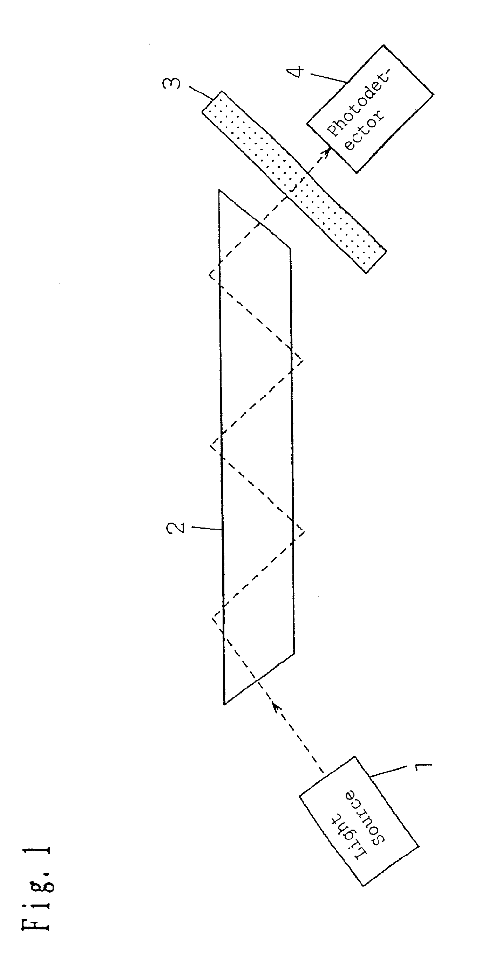

The following will discuss the detail of an embodiment of the present invention in accordance with the accompanied drawings. Referring to Figure 1, the embodiment of the present invention will be described. Figure 1 is a schematic drawing showing a measuring apparatus of a specific component in accordance with the embodiment of the present invention.

A SiC light source is used as a light source 1. The SiC light source can emit an infrared ray with a longer wavelength than that of a tungsten-halogen light source. For example, the SiC light source is particularly preferable when measurement is performed on a substance such as glucose having an absorption peak in an infrared region with a wave number of about 1080 cm⁻¹.

As an ATR element 2 used as an example of an optical element of the present invention, for example, a transparent single-crystal silicon substrate is used for light having a wavelength of 1.1 to 10 microns. Particularly a substrate having a small content of impurity such as boron and phosphorus with a resistivity of 100 Ωcm or more is preferable. Further, a substrate with a resistivity of 1500 Ωcm or more is preferable. These kinds of silicon having high resistivities are high in transmittance at an infrared wavelength of about 9 to 10 microns and are suitable for measuring substances such as glucose having absorbing areas in these wavebands. Moreover, germanium is preferable because it is transparent in these infrared regions. Such an ATR element 2 is in contact with a sample such as oral mucous membrane of the present invention.

A polarizer 3 used as an example of a polarizer of the present invention is placed on an optical path between the ATR element and a photodetector 4. Light of a P-polarized component can be retrieved from an infrared ray of non-polarization by using the polarizer 3. Namely, the polarizer 3 is rotated in the above state, so that a polarized component of light reaching the photodetector 4 becomes P polarization. As the photodetector 4, for example, a pyroelectric sensor and an MCT detector are used.

Referring to Figure 1, the following will discuss the operating principle for the concentration measuring apparatus of a specific component of the present invention. Light emitted from the light source 1 to the ATR element 2 propagates through the ATR element 2 while repeating total reflection. Although light is totally reflected on the interfaces of the ATR element 2, light slightly permeating to an external medium (e.g., oral mucous membrane) of the ATR element 2 at this point. Light permeating from the interfaces thus is called an evanescent wave. It has been known that the evanescent wave permeates from the interface at a length about several times a wavelength. Light permeating from the interface thus is affected by a specific component in a medium, passes through the polarizer 3 while propagating through the inside of the ATR element 2, and is introduced to the photodetector 4. The photodetector 4 analyzes introduced light according to an amount of the light and determines a concentration of a specific component according to the wavelength.

Namely, when a large mount of a specific component is contained according to a predetermined wavelength, the photodetector 4 detects a large absorption peak. Conversely, when a small amount of a specific component is contained, the photodetector 4 detects a small absorption peak. Then, comparison is made with the reference absorption peak of the photodetector 4 at the wavelength, so that a concentration of a specific component is determined according to the wavelength.

Figure 2 shows results obtained by applying a glucose solution outside the ATR element 2 as a sample of the present invention and measuring absorbance characteristics. As a glucose solution used as a sample, a solution with a concentration of 1000 mg/dl was used.

The solid line of Figure 2 shows the results obtained by making setting so that P polarization passes through the polarizer 3 and causing the photodetector 4 to perform spectral measurement on an absorbance of the glucose solution in a range of a light wave number from 1000 to 1125 cm⁻¹. The broken line indicates measurement results obtained when the polarizer 3 is not present. By making setting so that P polarization passes through the polarizer 3, it is possible to readily recognize a change in light of the P polarization state, the light permeating from the ATR element 2.

When P polarization is used, the spectral property is substantially equal in shape to non-polarization but are quite different in absorbance at each wavelength. For example, when the wave number is 1080 cm⁻¹, an absorbance is about 0.0058 for non-polarization. Meanwhile, when P polarization is used, an absorbance is increased to about 0.0073.

This is because P polarization has more light permeating into a glucose solution as compared with non-polarization light, the light enters more deeply, and thus an optical length of the light is substantially increased.

This means that it is preferable to use P polarization to detect an extremely weak signal with high sensitivity, and preferred results can be obtained by using.P polarization in the above-described manner.

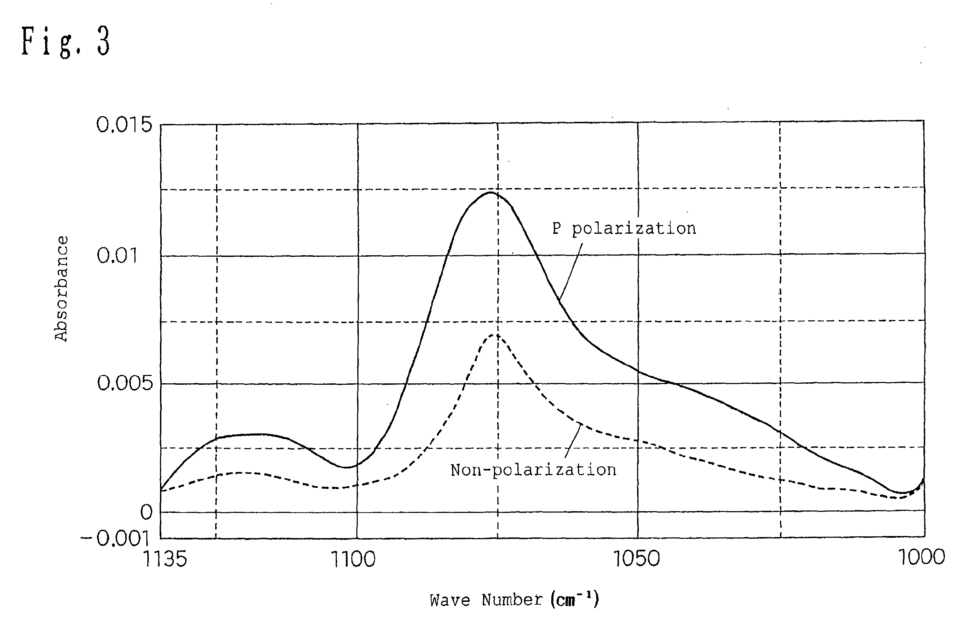

Figure 3 shows absorbance properties of light in the P polarization state when oral mucous membrane is used as a sample of the present invention. As with the glucose solution shown in Figure 2, an absorbance measured by using P polarization is larger than that of non-polarization using no polarizer. For example, at a wave number of 1080 cm⁻¹, in the case of light of non-polarization having no polarizer, an absorbance is about 0.007. On the other hand, an absorbance is largely increased to 0.0125 by using a P-polarized component.

This is because light of P polarization enters into oral mucous membrane more deeply than light of non-polarization and thus an absorbance increased.

Therefore, even when interfering substance such as saliva exists on oral mucous membrane, since light reaches the oral mucous membrane through the interfering substances, light is resistant to the influence of interfering substances. In this way, the concentration measuring method and apparatus of a specific component according to the present invention are not limited to a solution but are also effective for oral mucous membrane. Particularly when a concentration of glucose in oral mucous membrane is measured, measurement can be accurately performed for practical use in an effective manner by using P polarization. In this way, a concentration measuring apparatus of a specific component according to the present embodiment can noninvasively measure a concentration of a specific component in a living body, for example, a concentration of glucose in oral mucous membrane.

Besides, the above explanation described that a concentration of glucose in the sample is measured in a range of a wave number from 1000 and 1125 cm⁻¹. This range is just an example and a concentration of glucose may be measured in another range.

Additionally, as a specific component in a living body, the concentration measuring apparatus of a specific component according to the present embodiment can justly measure concentrations of specific components such as ethanol and cholesterol in addition to a concentration of glucose.

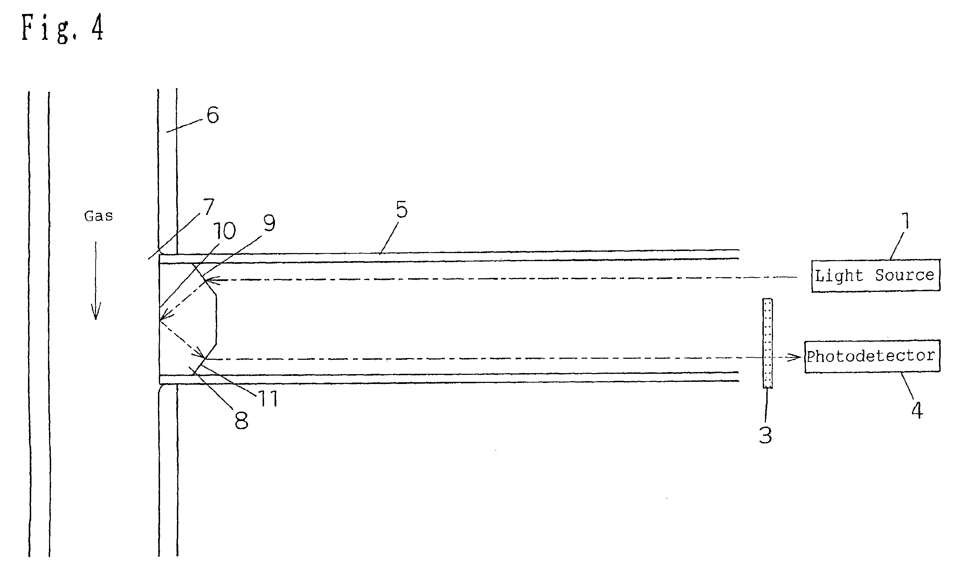

Also, the concentration measuring apparatus of a specific component according to the present embodiment can also measure specific components of gas in addition to a specific component existing in a solution. Figure 4 indicates an example when the present invention is used as a gas sensor.

In a concentration measuring apparatus shown in Figure 4, a hole 7 is formed so that a pipe 5 is installed on a gas pipe 6 where an arbitrary kind of gas exists, and the pipe 5 is inserted into the hole 7. A prism 8, which is an example of an optical element of the present invention and is composed of an ATR element, is installed on one end of the pipe 5. The prism 8 is made of a material sufficiently larger in index of refraction than gas to be measured. The prism 8 has an oblique surface 9 of performing refraction so as to emit light, which is emitted from the light source 1, to target gas and an interface 10 of the prism, and an oblique surface 11 of performing refraction so as to direct light totally reflected on the interface 10 to the photodetector 4.

The following will describe the operating principle of the concentration measuring apparatus configured thus. Light emitted from the light source 1 is refracted on the oblique surface 10 of the prism 8 and reaches the interface 10 of the prism 8 and gas. Light totally reflected on the interface 10 is refracted on the oblique surface 11 of the prism 8, is returned through the pipe 5, passes through the polarizer 3, and reaches the photodetector 4. At this point, since light partially permeates on the interface 10, light affected by gas is analyzed by the photodetector 4 via the polarizer 3. At this point, when the polarizer 3 is set so as to permit passage of a P polarized wave, as in the above case, components of gas can be analyzed with higher precision. When gas on the surface of the prism 8 changes in concentration, since returned light is changed in amount, a gas concentration can be determined according to an amount of light as in the above case.

As described above, according to the concentration measuring apparatus shown in Figure 4, the concentrations of components can be analyzed without extracting gas from the gas pipe 6 and so on.

Gas can be detected when absorbing can be made at a wavelength of a used light source. For example, ethanol, water, carbon dioxide, and so on can be detected.

Besides, the above example of Figure 4 described that the pipe 5 is directly inserted into the hole 7 of the gas pipe 6 to measure a concentration of gas. A valve for measurement (not shown) may be provided on the gas pipe 6 and the pipe 5 may be installed via the valve. In this case, the pipe 5 is installed on one side of the valve while the valve is closed, and the valve is opened when a concentration of gas is measured.

Additionally, the above explanation described that the polarizer 3 is placed between the ATR element and the photodetector 4 as shown in Figure 1. The position is not limited to the above. The configuration is acceptable as long as the polarizer is placed on the optical path between the light source 1 and the photodetector 4. The same effect can be also obtained in the above configuration. In this case, it is also preferable that the polarizer 3 is integrated with, for example, the light source 1, the photodetector 4, the ATR element 2, and so on. This configuration achieves a smaller apparatus.

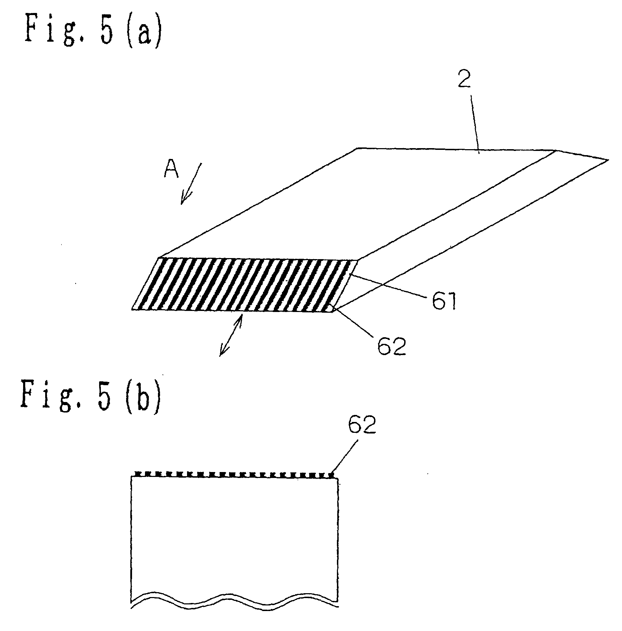

Figure 5 is a diagram showing an example where the polarizer is integrated with the ATR element 2. Figure 5(a) is a perspective view showing the configuration, and Figure 5 (b) is a sectional view taken from A direction of Figure 5(a).

Linear shielding films 62, which are an example of the polarizer of the present invention, are formed on a surface of receiving or emitting light for the ATR element 2. As a material of the shielding films 62, any material is applicable as long as it reflects or absorbs used light. Then, for example, the shielding films 62 are formed by mask vapor deposition and photolithography on the surface where light is received or emitted for the ATR element 2.

It is preferable that the shielding film 62 is 10 nm to 1 micron in thickness. When the thickness is less than 10 nm, light passes through the film. A thickness exceeding 1 micron is not preferable because vapor deposition time and etching time are increased when the shielding films 62 are formed.

An interval between lines formed as the shielding films 62 is set at, for example, 0.5 to 3 microns. Such an interval is set between the lines, so that a large amount of light of P polarization can pass through the films along the arrow of Figure 5. Light of a polarized component that is perpendicular to the arrow is absorbed by the shielding films 62 and can hardly pass through (not shown) the films.

In this way, the polarizer is integrated with the ATR element 2, so that it is not necessary to position the polarizer with respect to the ATR element, thereby simplifying assembling of the concentration measuring apparatus. Moreover, the configuration is effective for miniaturization of the concentration measuring apparatus.

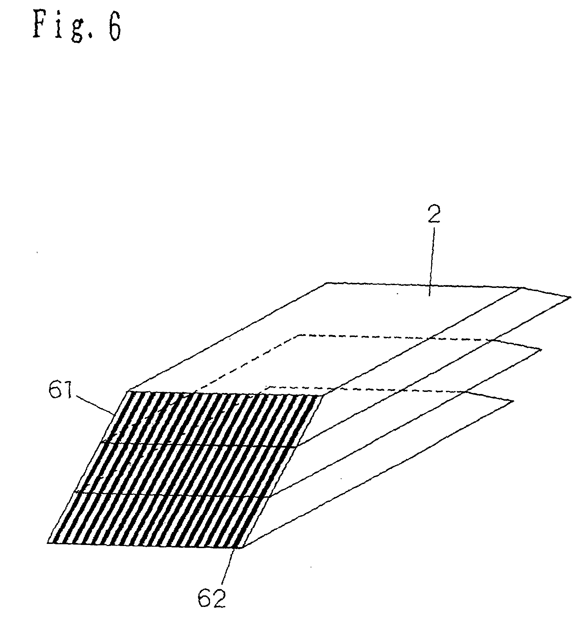

Figure 6 shows an example of mass-producing the ATR element having the above-described polarizer.

As shown in Figure 6, first, a number of the ATR elements 2 are stacked. For example, Figure 6 shows an example where the ATR elements 2 are stacked in three stages. In this case, the ATR elements 2 are stacked so as to align sides 61 for inputting and outputting light to and from the ATR elements 61.

Next, by using film-forming means of vacuum vapor deposition and so on, the shielding films 62 are formed on the incident surface or the light-emitting surface of the ATR element 61. Hence, the shielding films can be readily formed on the ATR.

Such a manufacturing method is effective for mass production because the polarizer can be integrally formed on the stacked ATR elements by one operation.

Besides, although the above explanation described that the light source 1 is a SiC light source, a quantum cascade laser light source may be used as the light source 1. The quantum cascade light source is particularly useful because it is smaller in heat value than the SiC light source and thus thermal damages on a living body and an apparatus are reduced.

Moreover, as described above, the concentration measuring method of a specific component in the above explanation is not limited to the effect of a solution. The method is also effective for measuring a specific component in oral mucous membrane and measuring a specific gas component for a gas sensor.

Further, in the concentration measuring apparatus according to the above explanation, for example, spectrometric means (not shown) may be provided between the light source 1 and the ATR element 2. Hence, this configuration is preferable because a wavelength spectral property of a specific component can be measured and absorbing characteristics can be obtained at various wavelengths. Particularly spectroscopy FT-IR using an interferometer is preferable because measurement can be performed with high sensitivity.

As described above, the present invention can provide a concentration measuring apparatus and a measuring method of a specific component whereby high signal strength can be readily obtained with a simple configuration and a concentration of a specific component can be accurately measured. The concentration measuring apparatus and measuring method of a specific component according to the present invention are practically useful because a weak signal can be detected while being amplified.

Moreover, the above explanation described that light returned from a sample is received and a concentration of a specific component in the sample is measured according to an amount of the received light. Instead of an amount of light, a concentration of a specific component may be measured according to parameters other than an amount of light that include a change in wavelength of light and a scattering state. Namely, the concentration measuring apparatus of a specific component according to the present embodiment may be configured so as to measure a concentration of a specific component in a sample according to received light. In this case, if light permeating from the interface is affected by the sample making contact with the interface and changes a wavelength of light, the scattering state, and so on, the same effect can be obtained.

Additionally, the above explanation described that light returned from a sample is received and a concentration of a specific component in a sample is measured according to the received light. In addition to a concentration, information other than a concentration that includes a temperature, a humidity, a viscosity, and a density may be measured. In this case, any kind of information is acceptable as long as it conforms to received light. In this case, the same effect can be obtained.

Besides, the above explanation described that the polarizer of the present invention is set so as to permit passage of P polarization. The polarizer of the present invention is not limited to the function of permitting only light of a P-polarized component to pass through. The polarizer may have the function of permitting passage of light of a P-polarized component more than light of other polarized components. In this case, the same effect can be obtained.

Namely, the polarizer of the present invention does not always permit only passage of light of complete P polarization. When passage is allowed for light of P polarization more than light of P-polarized components in a non-polarization state, the same effect can be obtained.

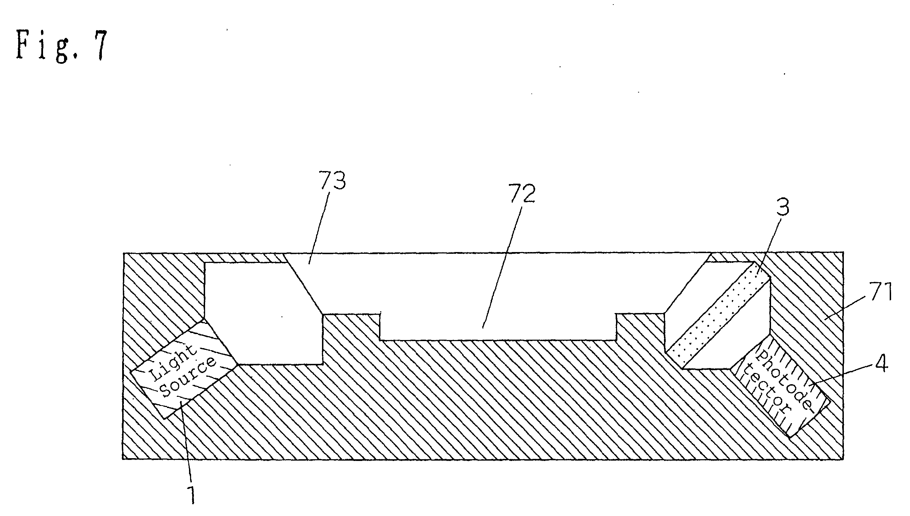

Furthermore, the range of the present invention includes a holding mechanism which performs holding when the above-described ATR element 2 is used. Figure 7 is a sectional view showing an example of such a holding mechanism.

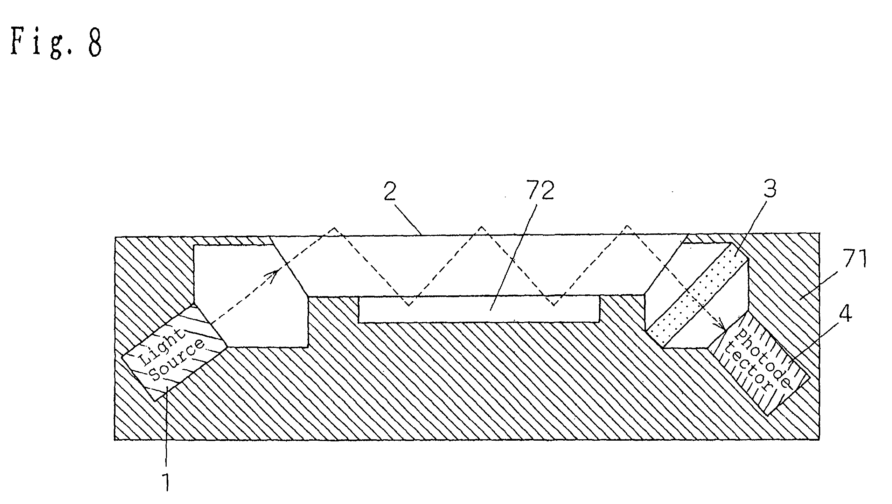

A holding mechanism 71 shown in Figure 7 has the light source 1, the polarizer 3, and the photodetector 4, and a notch 73 is further provided for holding the ATR element. A notch 72 is further formed on the notch 73. As shown in Figure 8, the notch 72 is provided for eliminating the influence of light permeating from the ATR element 2 on the material property of holding means when the ATR element 2 is held and used as shown in Figure 8. Besides, Figure 7 shows a mechanism of holding the ATR element 2 together with the light source 1, the polarizer 3, and the photodetector 4. The light source 1, the polarizer 3, or the photodetector 4 may be placed separately from the holding mechanism 71. In this case, the mechanism is acceptable as long as the ATR element 2 is held by the holding mechanism 71, and light source 1, the polarizer 3, and the photodetector 4 are arranged so as to obtain the same effect.

Further, the above explanation described that the optical element of the present invention is the ATR element 2. An element other than the ATR element is acceptable as long as the element has the same effect.

Moreover, the photodetector of the present invention may be a photodetector other than an MCT detector and a pyroelectric sensor.

The following will discuss an invention devised by the inventor in association with the present invention.

A first invention of the present invention is an information measuring method of a specific component, the method comprising the step of emitting light from a light source to a sample and receiving light returned from the sample, and the step of detecting the received light and measuring information of a specific component in the sample according to the detected light, wherein on an optical path between the light source and the photodetector, a polarizer is set to permit passage of light of a P-polarized component more than light of other polarized components, so that light of a P-polarized component affected by the sample is detected.

A second invention of the present invention relates to an information measuring apparatus of a specific component comprising a light source, a holding mechanism of holding an optical element which emits light from the light source to a sample and receives light returned from the sample, a photodetector of detecting light returned to the optical element, and a polarizer set to permit passage of light of a P-polarized component more than light of other polarized components, wherein information of a specific component in the sample is measured according to light detected by the photodetector.

A third invention of the present invention relates to an optical element of emitting light from a light source to a sample and receiving light returned from the sample, wherein light returned from the optical element is detected by a photodetector, a polarizer is set to permit passage of light of a P-polarized component more than light of other polarized components on an optical path between the optical source and the photodetector, and information of a specific component in the sample is measured according to light detected by the photodetector.

A fourth invention of the present invention relates to the optical element of the third invention, in which a shielding film of reflecting or absorbing at least some of polarized components other than the P-polarized component is formed on at least a part of a light inputting/outputting surface, and the polarizer is formed on the formation part.

### Industrial Applicability

According to the present invention, it is possible to provide an information measuring apparatus of a specific component whereby high signal strength can be obtained without being affected by an interfering substance on a surface of a sample.

## Claims

1. An information measuring apparatus of a specific component, **characterized in that** the apparatus comprises:
a light source,
an optical element of emitting light from the light source to a sample and receiving light returned from the sample,
a photodetector of detecting light returned to the optical element, and
a polarizer set to permit passage of light of a P-polarized component more than light of other polarized components on an optical path between the light source and the photodetector, and
information of a specific component in the sample is measured according to light detected by the photodetector.

2. The information measuring apparatus according to claim 1, **characterized in that** the photodetector detects an amount of the light, the information concerns a concentration, and the concentration is measured according to the amount of light.

3. The information measuring apparatus according to claim 1 or 2, **characterized in that** a wave number of the light and the specific component correspond to each other.

4. The information measuring apparatus according to any one of claims 1 to 3, **characterized in that** the optical element is an ATR element, the sample is in contact with the ATR element, and the photodetector detects a P-polarized component permeating to the sample from the ATR element.

5. The information measuring apparatus according to any one of claims 2 to 4, **characterized in that** the wave number of light includes at least a range from 1000 to 1125 cm⁻¹ and a concentration of glucose in the sample is measured according to an amount of light in the range of the wave number.

6. The information measuring apparatus according to any one of claims 1 to 5, **characterized in that** the polarizer is integrated with the optical element, the light source, or the photodetector.

7. The information measuring apparatus according to any one of claims 1 to 6, **characterized in that** the light source is a SiC light source or a quantum cascade light source.

8. The information measuring apparatus according to any one of claims 1 to 7, **characterized in that** the photodetector is an MCT detector or a pyroelectric sensor.

9. The information measuring apparatus according to any one of claims 6 to 8, **characterized in that** a shielding film of reflecting or absorbing at least some of polarized components other than the P-polarized component is formed on at least a part of an inputting/outputting surface of light from the optical element, the light source, or the photodetector, and the polarizer is formed on the formation part.

10. The information measuring apparatus according to claim 9, **characterized in that** the optical element is composed of a plurality of the ATR elements, the plurality of ATR elements are arranged so that light inputting/outputting surfaces are aligned with each other, and the shielding film is formed on the arranged surfaces.

11. The information measuring apparatus according to any one of claims 1 to 10, **characterized in that** the light is emitted to mucous membrane of a living body.

12. The information measuring apparatus according to any one of claims 1 to 4, **characterized in that** the light is emitted to gas.
